# EUROPEAN PATENT APPLICATION

(11) **EP 4 717 603 A1**
(43) Date of publication of application: **01.04.2026**
(21) Application number: 23214020.2
(22) Date of filing: 04.12.2023
(51) Int. Cl.: B64D 27/357

(54) **FUSELAGE AEROSTRUCTURE AND BATTERY INTEGRATION OF AN ELECTRIC PROPULSION AIRCRAFT**

(71) Applicant: Lilium eAircraft GmbH, 82234 Wessling (DE)
(72) Inventor: The designation of the inventor has not yet been filed
(74) Representative: Ter Meer Steinmeister & Partner

(57) **Abstract**

The present invention provides an aircraft with an electric propulsion system, a fuselage (10) configured to host payload and energy storage elements (20), and lift generating wings attached to the fuselage (10). The fuselage (10) comprises an aerostructure to bear and distribute loads between the fuselage (10) and the wings. The aerostructure comprises a structure of frames (30), stringers and skin panels (41, 42, 43). A plurality of frames (30) are separated in a longitudinal direction of the fuselage (10) and arranged in parallel to each other, defining holding spaces (22) in between adjacent frames (30). A plurality of stringers extending predominately in the longitudinal direction of the fuselage (10) are separated in a circumferential direction of the fuselage (10) and are attached to a number of the frames (30). A plurality of skin panels are attached to the frames (30) and stringers, wherein a first (41) and second (42) set of the skin panels are defining the outer shape of the fuselage (10), the second set of the skin panels (42) covering the holding spaces (22) to the outside of the fuselage, and a third set of the skin panels (43) is covering and separating an interior of the fuselage (10) from the holding spaces (22). The holding spaces (22) are configured to host the energy storage elements (20), which are attached at least to the frames (30) and/or stringers of the aerostructure.

## Description

The present invention relates to an aircraft with an electric propulsion system, a fuselage configured to host payload and energy storage elements, and lift generating wings attached to the fuselage, the fuselage comprising an aerostructure to bear and distribute loads between the fuselage and the wings, the aerostructure comprising a structure of frames, stringers and skin panels.

Such an aircraft is disclosed, for example, in EP 3 998 208 A1. EP 3 998 208 A1 discloses an electric vertical take-off and landing (EVTOL) aircraft, wherein the battery modules are disposed between an inner structural wall defining an interior space of the fuselage and an outer fairing wall of the fuselage.

Structural frames are usually provided in a circular shape in order to reflect the cylindrical outer shape of the fuselage, especially in the case of pressurized cabins, which results in difficulties when it comes to an efficient way of integrating batteries for an electric propulsion system into the fuselage structure. Furthermore, damages may occur on the aircraft's belly due to its circular shape.

In view of this background, it was an object of the present invention to overcome the problems of the prior art and to provide an aircraft with an efficient integration of battery modules in the fuselage structure, which moreover, is as light weight as possible, while also having sufficient safety, performance and maintainability capabilities.

This object is achieved by an aircraft with an electric propulsion system, a fuselage to host payload and energy storage elements, and lift generating wings attached to the fuselage, the fuselage comprising an aerostructure to bear and distribute loads between the fuselage and the wings, the aerostructure comprising a structure of frames, stringers and skin panels, wherein a plurality of frames are separated in a longitudinal direction of the fuselage and arranged in parallel to each other, defining holding spaces in between adjacent frames, a plurality of stringers extending predominately in the longitudinal direction of the fuselage are separated in a circumferential direction of the fuselage and are attached to a number of the frames, a plurality of skin panels are attached to the frames and stringers, wherein a first and second set of the skin panels are defining the outer shape of the fuselage, the second set of the skin panels covering the holding spaces to the outside of the fuselage, and a third set of the skin panels is covering and separating an interior of the fuselage from the holding spaces, and the holding spaces are configured to host the energy storage elements, which are attached at least to the frames and/or stringers of the aerostructure.

The outer shape of the airframe, achieved by above configuration, enables an efficient integration of the energy storage elements in the fuselage structure in between the structural frames as well as an increased ground clearance. Moreover, as a result of utilizing frames for load introduction, flight, ground and emergency loads can be efficiently introduced into the fuselage, while those frames may also be symmetrically loaded.

It is to be noted that, according to the present invention, the first and second set of skin panels serve as outside fairings of the fuselage, whereas skin panels of the third set are inside panels, which are load bearing outside panels, but not the outside fairings.

In particular, due to the specific configuration of frames and skin panels an outer shape of an airframe and/or fuselage of the aircraft according to the present invention may reflect a rectangular shape on the bottom and sides with an arc like structure on top, which enables to accommodate the energy storage elements, which may also be referred to as batteries or battery modules, respectively, at the sides of the aircraft, whilst keeping a straight vertical cabin wall and not having excessive space between the energy storage elements and the outer shape, as it would be the case with a cylindrical shape of the airframe.

Similarly, on the bottom of the airframe/fuselage a straight substantially horizontal shape might be realized, which, compared to a cylindrical shape) reduces the aerodynamic and structural surface, increases belly ground clearance, while keeping the same floor and entry height, and reduces the gap between the substantially horizontal floor and belly skin, which needs to be bridged by structure.

The structural frames may match this outer shape and connect to the substantially straight vertical battery wall (wall to a cabin) as well as to a floor and are as a result much wider than they typically are.

In the case that each one frame is aligned in between each battery module and the battery modules are connected to those frames left and right of each battery module (and potentially to a battery wall), a symmetric load introduction to the frames in a downward load case may be provided which reduces weight due to a lower bending moment introduced by this case.

Accordingly, the outer shape of the fuselage may enable to reduce the aerodynamic and structural surface and allow for a more efficient packaging. The outer shape may also provide for less damages on the aircraft's belly due to an increased ground clearance or shorter landing gear (weight saving).

Additionally, frames and/or stringers, which are needed anyway, may be used to efficiently attach the energy storage elements / batteries to the airframe.

Furthermore, the frames may be aligned between each battery module which leads to a symmetric load introduction and, hence, to less weight in the frames.

Preferably, the holding spaces may be covered to the outside by removable skin panels, which enables easy replacement and maintenance of the energy storage elements from outside.

Further, inboard of the holding spaces skin panels may be attached to the frames and/or stringers to cover and separate the interior of the fuselage from the holding spaces. Accordingly, safety is increased, since passengers can not interfere with the energy storage elements.

In a preferred embodiment of the present invention, the first and third set of skin panels may be attached to each other to define a closed cross section, which increases stability of the overall structure and enables for a suitable load distribution.

In a further preferred embodiment, a number of the frames may have a closed cross section with frame sections of a circular, elliptical, rectangular, ovaloid and/or polygonal outer shape. Frames with a closed cross section may stiffen the aerostructure of the fuselage in a beneficial way.

Additionally, or alternatively, a number of the frames may have an open cross section with frame sections of a C-, I-, U- or Ω-shape. Frames with an open cross section may provide for a light weight structure.

Preferably, the fuselage cross section may be featuring a lower and upper cross section, wherein the holding spaces are located in the lower cross section. The fuselage may comprise a row of windows, which are located in the upper cross section. Hence, the center of gravity may be kept at a lower heigh. Additionally, the holding spaces as well as the windows may be arranged on top of each other, such as o not interfere.

In a furthermore preferred embodiment of the present invention, the windows may be arranged between adjacent frames, such that stability is not decreased by the windows.

In a preferred embodiment of the present invention, the fuselage may comprise a number of fuselage sections which are arranged in a longitudinal direction of the aircraft, including a number of main fuselage sections hosting the holding spaces. In addition, the fuselage may comprise at least one wing box section. Further, the fuselage sections or main fuselage sections may comprise a cabin section with seats arranged next to the skin panels separating a cabin of the aircraft from the adjacent holding spaces. In this way, passenger safety may be kept at a high level, since passengers can not interfere with the energy storage elements or battery modules, respectively.

In another preferred embodiment of the invention, the fuselage may comprise a number of floor panels, which are attached to a lower section of the frames. In this way a floor enabling passengers or crew members to stand/walk on may be built.

In a preferred embodiment of the present invention, the aircraft may be of the electrical propulsion type. In aircrafts of the electrical propulsion type battery mass may be approximately one third of the entire mass of the aircraft. Hence, an important topic in the field of aircrafts of the electrical propulsion type is to integrate the batteries, energy storage elements, respectively, into the overall structure of the aircraft, in particular the aerostructure in a beneficial way as provided by the present invention.

In an even more preferred embodiment of the present invention, the aircraft may be an electric vertical take-off and landing aircraft. Since an electric vertical take-off and landing (EVTOL) aircraft is intended to operate as often as possible, the batteries / energy storage elements will age more quickly, and will require replacement more than a typical battery electric vehicle (BEV). Additionally, the safety criticality of a battery module is more severe, as typical BEV does not suffer catastrophic failures if power supply is limited, while an EVTOL aircraft will not be able to land if power is not available due to a failure. The present invention is very advantageously applicable to EVTOL aircraft, since with the structure provided by the present invention, replacement and maintenance of the energy storage elements will become easier.

A preferred embodiment of the present invention will now be described in more detail with respect to the accompanying drawings, in which:
- Fig. 1: shows a perspective view of an aerostructure of a fuselage of an aircraft according to the preferred embodiment of the present invention.
- Fig. 2: shows a perspective view of a silhouette of the fuselage of the aircraft according to the preferred embodiment of the present invention, wherein some components are illustrated by broken lines.
- Fig. 3: shows a cross-sectional view of the aerostructure of the fuselage of the aircraft according to the preferred embodiment of the present invention, viewed in a longitudinal direction of the fuselage.
- Fig. 4: shows a schematic cross-section partial view of a passenger cabin of the fuselage of the aircraft according to the preferred embodiment of the present invention, viewed in a longitudinal direction of the fuselage.

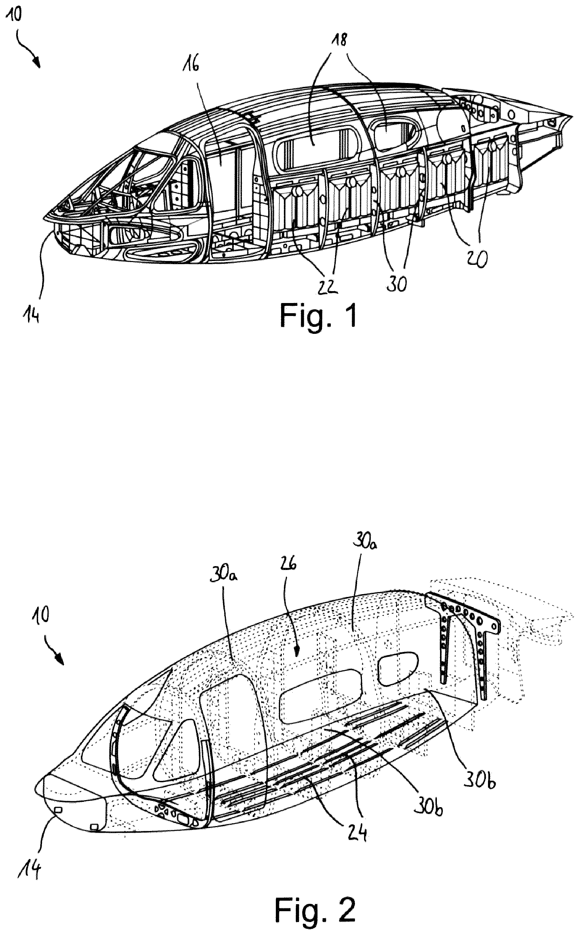

A fuselage 10 of an aircraft according to the present invention is shown in Figs. 1 and 2. The aircraft includes an electric propulsion system, which comprises energy storage elements realized by battery modules 20. The battery modules 20 are attached at least to the frames and/or stringers of the aerostructure.

Preferably, the aircraft further comprises a canard 14 and wings (not shown). In the fuselage 10 there may be provided an entry/exit door 16 and windows 18, in particular a row of windows 18, wherein the windows 18 may be arranged between adjacent frames 30.

Furthermore, the fuselage cross section may be featuring a lower and upper cross section, wherein the holding spaces 22 are located in the lower cross section. The windows 18 may be provided in the upper cross section.

The fuselage 10 comprises an aerostructure to bear and distribute loads between the fuselage 10 and the wings of the aircraft. The aerostructure comprises a structure of frames 30, stringers and skin panels 41, 42, 43.

The frames 20, which are indicated by broken lines in Fig. 2, are preferably separated in a longitudinal direction of the fuselage 10 and arranged in parallel to each other. Holding spaces 22 for hosting the battery modules 20 may be formed in between adjacent frames.

Preferably, the stringers extend predominately in the longitudinal direction of the fuselage 10, are separated in a circumferential direction of the fuselage 10 and are attached to a number of the frames 30.

A number of the frames 30a may have a closed cross section with frame sections of a circular, elliptical, rectangular, ovaloid and/or polygonal outer shape. In the present embodiment, the outer shapes of the frame sections of the frames 30a may be substantially rectangular at the bottom and the sides with an arc-like shape on top.

Moreover, a number of the frames 30b may have an open cross section with frame sections of a C-, I-, U- or Ω-shape, in the present embodiment substantially an U-shape.

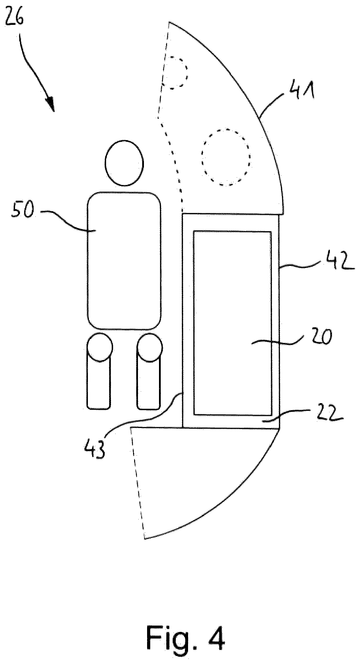

Furthermore, the fuselage 10 may comprise a number of fuselage sections which are arranged in a longitudinal direction of the aircraft, including a number of main fuselage sections hosting the holding spaces 22. As can be seen in Fig. 4, the fuselage sections or main fuselage sections may comprise a cabin section 26 with seats, on which passengers 50 are seated, arranged next to the skin panels 43 separating a cabin of the aircraft from the adjacent holding spaces 22. The fuselage 10 may further comprise a number of floor panels 24, which are attached to a lower section of the frames 30. The fuselage 10 may further comprise at least one wing box section.

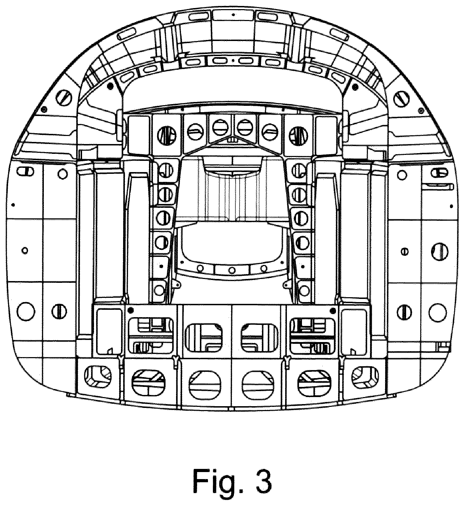

In Fig. 3 which shows a cross-sectional view of the aerostructure of the fuselage 10 at one frame, viewed in a longitudinal direction, the configuration and arrangement of frames, stringers and skin panels can be seen.

The skin panels 41, 42, 43 are preferably attached to the frames and stringers. As can be seen in Fig. 4, which is a schematic cross-section partial view of a passenger cabin of the aircraft, in which a passenger 50 is seated, a first 41 and second 42 set of the skin panels may define the outer shape of the fuselage 10, and a third set of the skin panels 43 may cover and separate an interior of the fuselage 10 from the holding spaces 22. The second set of the skin panels 42 preferably covers the holding spaces 22 to the outside of the fuselage. The first 41 and second 42 set of skin panels may serve as outside fairings of the fuselage 10, whereas skin panels 43 of the third set may be inside panels, which are load bearing outside panels, but not the outside fairings. The skin panels 42 of the second set may be removable, in order to be able to replace and/or maintain the battery modules 20.

Inboard of the holding spaces 22 skin panels 43 may be attached to the frames 30 to cover and separate the interior of the fuselage 10 from the holding spaces 22. The first 41 and third 43 set of skin panels may be attached to each other to define a closed cross section.

## Claims

1. Aircraft with an electric propulsion system, a fuselage (10) to host payload and energy storage elements (20), and lift generating wings attached to the fuselage (10), the fuselage (10) comprising an aerostructure to bear and distribute loads between the fuselage (10) and the wings, the aerostructure comprising a structure of frames (30), stringers and skin panels (41, 42, 43), wherein
• a plurality of frames (30) are separated in a longitudinal direction of the fuselage (10) and arranged in parallel to each other, defining holding spaces (22) in between adjacent frames (30),
• a plurality of stringers extending predominately in the longitudinal direction of the fuselage (10) are separated in a circumferential direction of the fuselage (10) and are attached to a number of the frames (30),
• a plurality of skin panels (41, 42, 43) are attached to the frames (30) and stringers, wherein a first (41) and second (42) set of the skin panels are defining the outer shape of the fuselage (10), the second set of the skin panels (42) covering the holding spaces (22) to the outside of the fuselage (10), and a third set of the skin panels (43) is covering and separating an interior of the fuselage (10) from the holding spaces (22), and
• the holding spaces (22) are configured to host the energy storage elements (20), which are attached at least to the frames (30) and/or stringers of the aerostructure.

2. Aircraft according to claim 1, wherein the holding spaces (22) are covered to the outside by removable skin panels (42).

3. Aircraft according to claim 1 or 2, wherein inboard of the holding spaces (22) skin panels (43) are attached to the frames (30) and/or stringers to cover and separate the interior of the fuselage (10) from the holding spaces (22).

4. Aircraft according to any one of claims 1 to 3, wherein the first (41) and third (43) set of skin panels are attached to each other to define a closed cross section.

5. Aircraft according to any one of claims 1 to 4, wherein a number of the frames (30a) are having a closed cross section with frame sections of a circular, elliptical, rectangular, ovaloid and/or polygonal outer shape.

6. Aircraft according to any one of claims 1 to 5, wherein a number of the frames (30b) are having an open cross section with frame sections of a C-, I-, U- or Ω-shape.

7. Aircraft according to any one of claims 1 to 6, wherein the fuselage cross section is featuring a lower and upper cross section, wherein the holding spaces (22) are located in the lower cross section.

8. Aircraft according to claim 7, wherein the fuselage (10) comprises a row of windows (18), which are located in the upper cross section.

9. Aircraft according to claim 8, wherein the windows (18) are arranged between adjacent frames (30).

10. Aircraft according to any one of claims 1 to 9, wherein the fuselage (10) comprises a number of fuselage sections which are arranged in a longitudinal direction of the aircraft, including a number of main fuselage sections hosting the holding spaces (22).

11. Aircraft according to claim 10, wherein the fuselage (10) comprises at least one wing box section.

12. Aircraft according to claim 10 or 11, wherein the fuselage sections or main fuselage sections comprise a cabin section (26) with seats arranged next to the skin panels (43) separating a cabin of the aircraft from the adjacent holding spaces (22).

13. Aircraft according to any one of claims 1 to 12, wherein the fuselage (10) comprises a number of floor panels (24), which are attached to a lower section of the frames (30).

14. Aircraft according to any one of claims 1 to 13, wherein the aircraft is of the electrical propulsion type.

15. Aircraft according to any one of claims 1 to 14, wherein the aircraft is an electric vertical take-off and landing, EVTOL, aircraft.
